# EUROPÄISCHE PATENTSCHRIFT

(11) **EP 0 943 664 B1**
(45) Veröffentlichungstag und Bekanntmachung des Hinweises auf die Patenterteilung: **04.08.2004**
(21) Anmeldenummer: 99104449.6
(22) Anmeldetag: 05.03.1999
(51) Int. Cl.: C09D 7/12, B01F 5/08

(54) **Nanopartikel enthaltende transparente Lackbindemittel mit verbesserter Verkratzungsbeständigkeit, ein Verfahren zur Herstellung sowie deren Verwendung**
Transparent coating binder containing nanoparticles having improved scratch resistance, process for their preparation and their use
Liant de revêtement transparent contenant des nanoparticules ayant une résistance améliorée au rayage, procédé pour leur préparation et leur utilisation

(30) Priorität: 18.03.1998 DE 19811790
(43) Veröffentlichungstag der Anmeldung: 22.09.1999
(73) Patentinhaber: Bayer MaterialScience AG, 51368 Leverkusen (DE)
(72) Erfinder: Bock, Manfred, Dr., 51375 Leverkusen (DE); Engbert, Theodor, Dr., 50968 Köln (DE); Groth, Stefan, Dr., 51373 Leverkusen (DE); Klinksiek, Bernd, 51429 Bergisch Gladbach (DE); Yeske, Philip, Dr., 51061 Köln (DE); Jonschker, Gerhard, Dr., 66583 Spiesen-Elversberg (DE); Dellwo, Ulrike, 66125 Saarbrücken (DE)

(56) Entgegenhaltungen:
- EP-A- 0 805 171
- DE-A- 19 536 845
- US-A- 4 481 328
- US-A- 5 073 404

## Beschreibung

Die Erfindung betrifft Nanopartikel enthaltende transparente Lackbindemittel mit verbesserter Verkratzungsbeständigkeit, ein Verfahren zur Herstellung sowie deren Verwendung.

Zubereitungen von im wesentlichen nanoskaligen Teilchen in einer organischen, anorganischen oder organisch/anorganischen Matrix sind für eine Vielzahl von Anwendungen von Interesse. So können spezielle Eigenschaftenkombinationen bei Beschichtungen wie zum Beispiel Transparenz und Verschleißfestigkeit durch den Einsatz von Nanopartikeln erzielt werden. Es ist daher vor allem für hochwertige transparente Lackanwendungen wünschenswert Lackbindemittel so mit Nanopartikeln auszurüsten, daß bei bleibender Transparenz und Glanz eine Verbesserung in der Verkratzungsbeständigkeit erreicht wird.

Zur Herstellung von nanoskaligen Teilchen enthaltenden Zubereitungen kommen eine Reihe unterschiedlicher Verfahren in Betracht.

Für die Herstellung von trockenen nanoskaligen Materialien sind mehrere Verfahren bekannt, die vor allem bei der Herstellung von pyrogenen Kieselsäuren großtechnische Verwendung finden (z.B. Aerosil-Verfahren, Lichtbogen-Verfahren DE-A 11 80 723, Plasmaverfahren (Powder Technol. **1978**, *20*, 159). Diese Verfahren sind u.a. in Chemische Technologie", *Band 2*, Anorganische Technologie II, 4. Auflage, **1983**, Seite 77 beschrieben.

Weitere Beispiele der Erzeugung primär nanoskaliger trockener Materialien betreffen die Herstellung von keramischen Teilchen durch Matrix-Pyrolyseverfahren in einem brennbaren Trägermaterial, z.B. EP-A 680 454 und EP-A 697 995.

Die genannten Verfahren zur Herstellung nanoskaliger Pulver liefern zwar bei entsprechender Prozeßführung primär nanoskalige Teilchen mit sehr niedrigen mittleren Teilchendurchmessern (ca. 5 bis 50 nm) welche jedoch durch Aneinanderlagerung der Primärpartikel nicht als diskrete Teilchen, sondern überwiegend als Agglomerate vorliegen Derartige Agglomerate können Durchmesser von mehreren tausend Nanometem erreichen, so daß erwünschte, mit der nanoskaligen Natur der Teilchen verknüpfte Eigenschaften nicht erzielbar sind.

Durch z.B. Vermahlen kann eine Deagglomeration der Teilchen bewirkt werden. (z.B. EP-A 637 616). Agglomerate können so in ihrer Größe auf ein sechstel reduziert werden. Nachteile sind jedoch die geringe Raum/Zeit-Ausbeute sowie die nicht zu vermeidende Kontamination durch Abrieb aus dem mitverwendeten Mahlhilfsmittel.

Bis heute ist es unbekannt, ausgehend von verfügbaren Agglomerat-haltigen nanoskaligen Pulvern mit vertretbarem Aufwand Agglomerat-freie Pulver oder Pulver-Zubereitungen zu erzeugen. Als alternative Herstellprozesse sind verschiedene Verfahren entwickelt worden, in denen ausgehend von niedermolekularen diskreten oder als z.B. Solen vorliegenden Synthesebausteinen über einen kontrollierten Wachstumsprozeß Zubereitungen mit zumindest weitgehend Agglomerat-freien nanoskaligen Partikeln oder Kompositen hergestellt werden können.

So können im Sol-Gel-Prozeß ausgehend von Metallalkoxiden durch gesteuerten Molekulargewichtsaufbau Teilchen erzeugt werden, deren mittlerer Durchmesser unter 50 nm liegt. Solche Systeme finden beipielsweise als Beschichtungsmittel oder Werkstoff-Vorläufer Verwendung (z.B. *The Polymeric Materials Encyclopedia* 1996, Vol 6, 4782-4792 ff).

Durch hohen technischen Aufwand, der in der Regel mit solchen Herstellprozessen verbunden ist, sind die so erhältlichen Produkte nur sehr begrenzt einsetzbar. Auch sind derartige Verfahren nur auf eine begrenzte Auswahl von chemisch unterschiedlichen Produktklassen anwendbar.

Nanoskalige Metalloxidsole sind ebenfalls bekannt. Es handelt sich dabei um meist 30 bis 50%ige colloidale Losungen von Metalloxiden (Si, Al, Ti, Zr, Ta, Sn, Zn) in wassrigen oder organischen Medien mit mittleren Teilchengrößen von 4 bis rund 60 nm. Durch elektrische und/oder sterische Stabilisierung der Partikeloberflächen gelingt es solche Metalloxidsole an eine Agglomeration zu hindern. Besonders hervorzuheben sind wässrige Kieselsole, die beispielsweise durch Ionenaustauschverfahren aus alkalischen Lösungen hergestellt werden können (z.B. *Ullmann's Encyclopedia of Indusrtial Chemistry*, *5*. Auflage, Band A23, VCH-Verlag, Weinheim, **1993,** S. 614-629). Solche Produkte sind im Handel beispielsweise unter Markennahmen wie Levasil® (Fa. Bayer AG) erhältlich.

Der Nachteil von dispers gelösten Nanopartikel wie etwa Kieselsolen oder anderen Metalloxidsolen liegt in der starken Tendenz zur Agglomeration bei Entfernung oder Änderung des Lösungsmediums, so daß ein homogenes Einbringen in eine fremde Matrix wie etwa eine Lackformulierung nicht ohne weiteres möglich ist. Durch Modifizierung der Oberfläche der Teilchen und Anpassung des Losungsmittels kann ein homogenes Einarbeiten in eine Lackformulierung ermöglicht werden. Ein solches Verfahren (z.B. EP-A 768 351), ist allerdings technisch sehr aufwendig und nur begrenzt einsetzbar.

In der EP-A 766 997 wird ein Verfahren zur Herstellung von feinteiligen Feststoffdispersionen beschrieben. Nach diesem Verfahren wird es ermöglicht eine Zerkleinerung von suspendierten Feststoffteilchen zu erreichen. Eine Deagglomeration von primär nanoskaligen Teilchen und deren Verwendung in Lackbindemitteln wurde hier nicht in Betracht gezogen. Das Verfahren ist als Düsendispergierverfahren im Prinzip bekannt und wird für andere Zwecke wie z.B. zur Feinverteilung von nicht mischbaren flüssigen Phasen, wie Wasser in Öl, bereits industriell genutzt. Die Herstellung von verbesserten 2-komponentigen wässrigen Lackemulsionen mittels feinteiligerer Emulgierung kann z.B. nach dem Verfahren der EP-A 685 544 erfolgen.

Aufgabe der Erfingung war es nun, ein einfaches Verfahren zur Herstellung von transparenten Lackbindemitteln zur Verfügung zu stellen, die nanoskalige Teilchen zur Verbesserung des Eigenschaftsniveaus, wie z. B. der Verkratzungsbestandigkeit enthalten.

Es wurde nun überraschend gefunden, daß es mit dem in der EP-A 766 997 beschriebenen Düsenstrahl-Dispergierverfahren möglich ist, bei einer Vordispersion von Agglomerat-haltigen Nanopartikeln eine deutliche Reduzierung der Agglomeratanteile zu bewirken, so daß die nach diesem Verfahren hergestellten Feststoffdispersionen als Lackbindemittel für transparente Beschichtungen eingesetzt werden können. Zudem erwiesen sich die Dispersionen von Nanopartikeln in Gegenwart von Lackbindemittel als besonders stabil gegen Reagglomeration und Sedimentation.

Gegenstand der Erfindung sind Nanopartikel-haltige transparente Lackbindemittel, die bezogen auf den Lackfestkörper 0,5 bis 25 Gew.-% von als Feststoff einarbeitbare, primär nanoskalige Teilchen enthalten, hergestellt durch Düsenstrahldispergierung der nanoskaligen Teilchen im Bindemittel.

Die erfindungsgemäßen feste Nanopartikel enthaltenden transparenten Lackbindemittel können nun für Bereiche, die vorher aufgrund der großen Agglomeratanteile nicht zugänglich waren, wie beispielsweise in Klarlackanwendungen, als attraktive Ausgangsmaterialien zur Eigenschaftsverbesserung eingesetzt werden. Überraschend war auch, daß die Verwendung dieser mit Nanopartikeln modifizierten Lackbindemittel vor allem bei Klarlackanwendungen zu einer verbesserten Verkratzungsbeständigkeit führte und zudem gleichzeitig eine verbesserte Chemikalienbeständigkeit bewirkte.

Die erfindungsgemäßen Nanopartikel-haltigen transparenten Lackbindemittel enthalten 0,5 bis 25 Gew.-%, bevorzugt 2 bis 20 Gew.-%, bezogen auf den Bindemittelfestkörper, von als Feststoff einarbeitbaren primär nanoskaligen Teilchen. Die Nanoteilchen werden mittels des in der EP-A 766 997 genannten Dispergierverfahrens deagglomeriert. Sie werden erfindungsgemäß vorteilhaft in Lackbindemitteln in 2-komponentigen Polyurethanlacken verwendet. Die daraus hergestellten Überzüge haben 20°-Glanzwerte (nach DIN 67530) von mehr als 70, bevorzugt mehr als 80, besonders bevorzugt mehr als 85 rel Glanzeinheiten.

Die als Ausgangsmaterialien für das erfindungsgemäße Bindemittel in Betracht kommenden Agglomerate enthaltenden nanoskaligen Materialien sind vorzugsweise Pulver oder Pulverzubereitungen. Dies Primärpartikel sind nanoskalig, d.h., deren mittlerer Primarteilchen-Durchmesser liegt unter 200 nm, bevorzugt unter 100 nm und besonders bevorzugt unter 50 nm.

Beispiele sind die u.a. auch als Mattierungsmittel bekannten pyrogenen Kieselsäuren, nanoskalige Aluminiumoxide und Aluminiumoxidhydrate, nanoskalige Titandioxidund Zirkondioxidtypen sowie andere z.B. aus Solen herstellbare nanoskalige Oxide der Elemente Aluminium, Titan, Zirkonium, Tantal und Zinn. Es kann von Vorteil sein, auch oberflächenmodifizierte Teilchen einzusetzen oder z.B. eine Oberflächenmodifizierung nach der Deagglomeration vorzunehmen, da diese eine zusätzliche Stabilisierung gegen Reagglomeration bewirkt, und zudem ein unerwünschter übermäßiger Thixotropieeffekt vermindert wird.

Bevorzugt eingesetzt werden pyrogene Kieselsäuren, wie sie z. B. von der Firma Degussa unter dem Handelsnamen Aerosil® erhältlich sind. Besonders bevorzugt sind aus den o.g. Gründen oberflächenmodifizierte Typen, die eine hydrophobierte Oberfläche aufweisen. Die Oberflächenmodifizierung wird üblicherweise mit gegenüber Si-OH reaktiven Verbindungen wie beispielsweise Octamethylcyclotetrasiloxan, Octyltrimethoxysilan, Hexamethyldisilazan und/oder Dimethyldimethoxysilan vorgenommen. Beispiele für solche Produkte sind Aerosil® R 104, R 202, R 805, R 812, R 812 S, R 972, R 974 von der Firma Degussa.

Geeignet sind auch Nitride und Carbide von Metallen und Halbmetallen, z.B. des Bors, Siliziums, Titans. Ferner beliebige andere anorganischen Verbindungen wie BaS04,Ti02, usw. die als feste Teilchen mit nanoskaliger Primarstruktur vorliegen. Selbstverständlich können auch beliebige Abmischungen verschiedener nanoskaliger Materialien mit mehr oder minder hohen Agglomerat-Anteilen zum Einsatz kommen.

Als Bindemittel kommen die in der Lack- und Beschichtungstechnologie ublichen Harze in Betracht wie sie beispielsweise in *Lackharze, Chemie, Eigenschaften und Anwendungen*, Hrsg. D. Stoye, W. Freitag, Hanser Verlag, München, Wien **1996** beschrieben sind.

Beispielhaft zu nennen sind u.a. die Polymerisate und Copolymerisate der (Meth)acryl-säure und deren gegebenenfalls weitere funktionelle Gruppen tragenden Estern mit weiteren, olefinisch ungesättigten Verbindungen, wie z.B. Styrol; weiterhin Polyether-, Polyester-, Polycarbonat-, Polyurethan- und Epoxidharze sowie auch beliebige Mischungen dieser Polymeren.

Bevorzugt werden als polymere organische Verbindungen Hydroxylgruppen tragende Polymere eingesetzt, z.B. Polyacrylat-, Polyester-, Polycaprolacton-, Polyether-, Polycarbonat-, Polyurethanpolyole und hydroxyfunktionelle Epoxidharze sowie beliebige Mischungen dieser Polymeren.

Als besonders bevorzugte polymere organische Verbindungen werden wässrige oder lösemittelhaltige bzw. lösemittelfreie Polyacrylat-und Polyesterpolyole sowie deren beliebige Mischungen eingesetzt.

Geeignete Polyacrylatpolyole sind Copolymerisate von Hydroxylgruppen aufweisenden Monomeren mit anderen olefinisch ungesättigten Monomeren, wie z. B. Ester der (Meth)acryl-säure, Styrol, α-Methylstyrol, Vinyltoluol, Vinylester, Malein- und Fumarsäuremono- und dialkylester, α-Olefine und weiteren ungesättigten Oligomeren und Polymeren.

Besonders geeignete Polyacrylatpolyole weisen ein mittels Gelpermeationschromatographie (Standard Polystyrol) bestimmbares, mittleres gewichtsgemitteltes Molekulargewicht von 2000 bis 100000, vorzugsweise 2500 bis 50000 und besonders bevorzugt 3000 bis 40000, eine Glasübergangstemperatur TG von -50°C bis +100°C, vorzugsweise -40 °C bis + 90 °C und besonders bevorzugt -30°C bis + 80°C, eine Säurezahhl von <30 mg KOH/g, vorzugsweise <25 mg KOH/g sowie einen Hydroxylgruppengehalt von 0,5 bis 14,0, vorzugsweise 0,5 bis 10,0 und besonders bevorzugt 1,0 bis 8,0 Gew.-% auf und bestehen aus
a) 0 bis 70 Gew.-Teilen, vorzugsweise 5 bis 70 Gew.-Teilen mindestens eines ungesättigten, aromatischen Monomeren, wie Styrol, α-Methylstyrol oder Vinyltoluol,
b) 0 bis 70 Gew.-Teilen, vorzugsweise 5 bis 70 Gew.-Teilen mindestens eines (cyclo)aliphatischen Esters der Acryl- und/oder Methacrylsäure mit 1 bis 18 Kohlenstoffatomen im (Cyclo)alkylrest,
c) 4 bis 95 Gew.-Teilen, vorzugsweise 10 bis 60 Gew.-Teilen mindestens eines Hydroxyalkylesters der Acryl- und/oder Methacrylsäure mit 2 bis 4 Kohlenstoffatomen im Hydroxyalkylrest und/oder Anlagerungsprodukte von Monoepoxiden an Acryl- und oder Methacrylsäure,
d) 0 bis 10 Gew.-Teilen, vorzugsweise 0,1 bis 5 Gew.-Teilen mindestens einer α,β-monoolefinisch ungesättigten Mono- oder Dicarbonsäure mit 3 bis 7 Kohlenstoffatomen und/oder mindestens eines Maleinsäure- bzw- Fumarsäurehalbesters mit 1 bis 14 Kohlenstoffatomen im Alkoholrest und
e) 0 bis 30 Gew.-Teilen, vorzugsweise 0 bis 20 Gew.-Teilen weiteren copolymerisierbaren, (auch mehrfach) olefinisch ungesättigten monomeren und/oder polymeren Verbindungen.

Die beschriebenen Nanopartikel enthaltenden hydroxylfunktionellen Polyole können in einkomponentigen wie auch in zweikomponentigen Lacksystemen zusammen mit den in der Lack- und Beschichtungstechnologie üblichen Härtern verwendet werden. Als Härter hierfür kommen beispielsweise Polyisocyanate oder mit Abspaltern wie Methylethylketoxim, Caprolactam, Malonsäureestern, Triazol oder 2,5-Dimethylpyrazol blockierte Polyisocyanate oder (teilweise)veretherte Melaminformaldehydharze in Betracht, wie sie z. B. in *Lackharze*, *Chemie*, *Eigenschaften und Anwendungen*, Hrsg. D. Stoye, W. Freitag, Hanser Verlag, München, Wien **1996** beschrieben sind.

Bevorzugt ist die Anwendung der erfindungsgemäßen, wässrigen oder lösemittelhaltigen Bindemittel in zweikomponentigen Systemen zusammen Polyisocyanaten auf Basis von Hexamethylendiisocyanat, Isophorondiisocyanat, 4,4'-Diisocyanato-dicyclohexylmethan, Tetramethylendiisocyanat, 2-Methylpentamethylendiisocyanat, 2,2,4-und 2,4,4-Trimethylhexamethylendiisocyanat (THDI), 1,4-Diisocyanato-cyclohexan, 3-Isocyanatomethyl-1-methyl-1-isocyanatocyclohexan (IMCI), a,a,a',a'-Tetramethylm- oder p-xylylen-diisocyanat (TMXDI), 1,4- und 1,3-Xylylendiisocyanat (XDI), Hexahydroxylylendiisocyanat (H6-XDI) und/oder deren Gemische sowie gegebenenfalls deren hydrophilierten Varianten für wässrige Bindemttel, wie sie beispielsweise in der DE-A 4 136 618 beschrieben sind. Besonders bevorzugt sind aber die Polyisocyanate auf Basis von Hexamethylendiisocyanat, Isophorondiisocyanat und 4,4'-Diisocyanatodicyclohexylmethan.

Diese Polyisocyanate werden als Härter in hochwertigen Polyurethanlacken eingesetzt, die eine hervorragende Chemikalienbeständigkeit und einen hohen Glanzgrad aufweisen. Ein zu große Teilchen enthaltendes Bindemittel würde sich in einem deutlichen Glanzabfall bemerkbar machen.

Durch das erfindungsgemäße Bindemittel kann jedoch bei gleichbleibendem Glanz und Transparenz eine verbesserte Verkratzungsbestandigkeit erreicht werden.

Besonders geeignet sind die erfindungsgemäßen Bindemittel für die Herstellung von Klarlacken, da hierdurch signifikante Eigenschaftsverbesserungen, wie die Verbesserung der Kratzfestigkeit, bei bleibender Transparenz und hohem Glanzgrad erreicht werden können. Typische Klarlackanwendungen, bei denen das erfindungsgemäße Bindemittel zu besonders deutlichen Vorteilen führt, sind z.B. die Fahrzeugserien- und Reparaturlackierung, die abriebfeste Beschichtung von Parkett- und anderen Böden, sowie die Antigraffitti-Ausrüstung von Fassaden und Mauern im Außenbereich.

Gegenstand der Erfindung ist auch ein Verfahren zur Herstellung von transparenten Nanopartikel-haltigen Lackbindemitteln, dadurch gekennzeichnet, daß die aus Nanopartikeln und Lackbindemitteln bestehende Zubereitung in mindestens einem Durchgang durch wenigstens eine Vorrichtung geleitet wird, die mindestens eine Düse oder mindestens einen Schlitzspalt aufweist, mit einem Bohrungsdurchmesser bzw. Spaltbreite von 0,05 bis 1 mm, sowie einem Länge zu Durchmesserverhältnis der Bohrung bzw. einem Tiefe zu Spaltbreite-Verhältnis des Schlitzspaltes von 1 bis 10, wobei zwischen Düsengang und Düsenausgang eine Druckdifferenz von mindestens 0,5 , bevorzugt 1 MPa, besteht.

Bevorzugt wird eine Vorrichtung, wie sie in der EP-A 766 997 beschrieben und dargestellt ist, eingesetzt. Die Vorrichtung besteht wenigstens aus einem Hochdruckraum und einem Niederdruckraum zur Aufnahme der Dispersion und einer zwischenliegenden Zerkleinerungsdüse, als Loch- oder Spaltdüse, dadurch gekennzeichnet, daß der Bohrungsdurchmesser bzw. die Spaltbreite der Düse 0,05 bis 1 mm beträgt und das Lände zu Durchmesser-Verhältnis der Bohrung bzw. das Tiefe zu Spaltbreite-Verhältnis des Schlitzspaltes der Düse 1 bis 10 beträgt. Bevorzugt sind Düsen mit wenigstens zwei mit ihrem Ausgang gegenüberleigenden Bohrungen bzw. Schlitzspalten. Insbesondere bevorzugt sind Düsen, bei denen der Abstand des Ausgangs mindestens zweier gegenüberliegender Düsen bzw. Spalte das 2- bis 50-fache des Bohrungsdurchmessers bzw. der Spaltbreite beträgt. In einer bevorzugten Ausführungsform beträgt der Bohrungsdurchmesser bzw. die Spaltbreite eines Spaltes der Düse von 0,1 bis 0,5 mm. Als Material für die Herstellung der Düse werden insbesondere keramische Werkstoffe verwendet, bevorzugt oxidische und graphitische Werkstoffe, oder gegebenenfalls mit den genannten Keramiken beschichtete Werkstoffe.

Bei der Durchführung des Verfahrens wird ein Druck von 5 bis 50 MPa, bevorzugt 7 bis 30 MPa, angewendet. Gegebenenfalls kann es zweckmäßig sein, Strahldispergatoren einzusetzen, in denen mehrere hintereinander geschaltetete Düsen vorgesehen sind, so daß die Dispersion mehrfach hintereinander durch eine Düse gedrückt wird. Bei solchen Strahldispergatoren mit mehreren Düsendurchgängen ist ein entsprechend der Anzahl Düsen erhöhter Druck anzuwenden. Im allgemeinen führt allerdings ein mehr als 3-facher Düsendurchgang nicht mehr zu einer wesentlichen Verbesserung.

Das zu desagglomerierende Material kann beliebig oft dem, wenn dies erforderlich ist, mehrstufig ausgelegtem Dispergierprozeß unterzogen werden.

Zur Durchführung des erfindungsgemäßen (Dispergier)Verfahrens für transparente Lackdispersionen wird das zu desagglomerierende nanoskalige, in der Regel bereits als feines Pulver vorliegende Material zuvor in einem geeigneten flüssigen Medium suspendiert. Dies kann z.B. mit den bekannten technischen Methoden, z B. durch Einruhren oder Einarbeiten in einem Dissolver bewerkstelligt werden.

Zur Durchführung des erfindungsgemäßen Verfahrens beispielsweise für überwiegend anorganische Nanoteilchen sind die gebräuchlichen Lösungsmittel als Dispergiermittel geeignet, wie aromatische, aliphatische, araliphatische oder cycloaliphatische Kohlenwasserstoffe, teilweise oder vollständig halogenierte aromatische, aliphatische, araliphatische oder cycloaliphatische Kohlenwasserstoffe, Alkohole wie z.B. Methanol, Ethanol, i-Propanol, Butanol, Benzylalkohol, Diacetonalkohol, Ester wie z.B. Ethylacetat, Propylacetat, Butylacetat, Etherester wie z.B. Methoxypropylacetat oder Butylglykolacetat, Ketone wie Aceton, Methylethylketon, Methylisobutylketon oder Cyclohexanon, stark polare Lösemittel wie z.B. N,N-Dimethylformamid, N,N-Dimethylacetamid, Dimethylsulfoxid, N-Methylpyrrolidon.

Weitere geeignete Dispergiermedien sind Wasser, flüssige Säureester wie z.B. Phosphorsäuredibutylester, Phosphorsäuretributylester, Sulfonsäureester, Borate oder die Derivate der Kieselsäure z.B. Tetraethoxysilan, Methyltrimethoxysilan, 3-Aminopropyltrimethoxysilan, 3-Aminopropyltriethoxysilan, Glycidyloxypropyltrimethoxysilan, Glycidyloxypropyltriethoxysilan. Auch verflüssigtes Kohlendioxid kann als Dispergiermedium eingesetzt werden.

Der erfindungsgemäße Dispergiervorgang kann auch bei erhöhter Temperatur (bis 200°C) vorgenommen werden. In diesem Fall können auch bei Raumtemperatur hochviskose oder feste Verbindungen, gegebenenfalls auch höhermolekularer Natur, als Dispergiermedien eingesetzt werden.

Den als Dispergiermedien verwendeten Materialien können weitere Stoffe zugesetzt werden. Bevorzugt sind dabei solche Stoffe, die auch für die spätere Weiterverwendung vorgesehen sind oder die die Desagglomeration bzw. die Eigenschaften, z.B. die Stabilität der desagglomerierten Materialien, verbessern.

Besonders bevorzugt sind die oligomeren oder polymeren organische Verbindungen wie z.B. die, oben aufgeführten, in der Lack- und Beschichtungstechnologie gebräuchlichen Harze und Bindemittel.

Auch die in Mehrkomponentensystemen verwendeten Kombinationsharze, wie z.B. die als Härter fungierenden Amin- und Melaminharze, Polyisocyanate, die als blokkierte Polyisocyanate bezeichneten Addukte aus aromatischen oder alipha-tischen Polyisocyanaten und sogenannten Abspaltern wie Methylethylketoxim, Caprolactam, Malonsäureestern oder Triazol und 2,5-Dimethylpyrazol können anteilig im Dispergiermedium mitverwendet werden. Eine ausschließliche Verwendung als Dispergiermedium ist dann möglich, wenn das in Betracht gezogenen lösemittelfreien Bindemittel eine für die Durchführung des erfindungsgemäßen Verfahrens nicht zu hohe Viskosität aufweist.

Für Verfahrensweisen, in denen Wasser als wesentlicher Bestandteil des Dispergiermediums verwendet wird, sind als Zusatzstoffe insbesondere wasserlösliche oder wasserverträgliche Verbindungen, wie z.B. teil- oder vollverseiftes Poly-vinylacetat oder hydrophilierte Varianten der zuvor genannten Verbindungsklassen geeignet. Weitere geeignete und bevorzugt in wässrigen Medien eingesetzte Zusatzstoffe sind z.B. Kieselsol und die Sole von Metalloxiden der Elemente Aluminium, Titan, Zirkonium, Tantal und Zinn.

Als niedermolekulare Zusatzstoffe, über die z.B. eine Stabilisierung der desagglomerierten nanoskaligen Teilchen gegen eine erneute Agglomeration erzielt werden können, sind im Prinzip alle Verbindungen geeignet, die zur Stabilisierung anderweitig, z.B. nach einer der o.g. Methoden, hergestellter nanoskaliger Materialien eingesetzt werden. Zu nennen sind beispielsweise hydrolisierbare Silangruppen tragende Verbindungen, wie Alkoxy- oder Chlorsilane. Auch bestimmte amphiphile Verbindungen können herangezogen werden. Die für die Herstellung des Dispergiermediums in Frage kommenden Lösemittel und Zusatzstoffe können beliebig miteinander abgemischt werden.

Die erfindungsgemäßen Lackbindemittel können mit allen üblichen Härter(Kombinationen) abgemischt werden zur Herstellung von Überzügen.

Im Hinblick auf eine hohe Effizienz des erfindungsgemäßen Verfahrens soll die Viskosität des Dispergiermediums bei der gewählten Verfahrenstemperatur 10 000 mPa·s, vorzugsweise 5 000 mPa·s, besonders bevorzugt 2 000 mPa·s nicht überschreiten.

Bei der bevorzugten Verfahrensvariante werden die pulverförmigen, primär nanoskaligen Teilchen in die mit Lösungsmitteln auf unter 2 000 mPas verdünnte Polyolkomponente portionsweise in einem Dissolver eingebracht und wie beschrieben deagglomeriert. Üblicherweise enthält die Mischung, bezogen auf den Festkörper, 0,5 bis 25 Gew.-%, bevorzugt 2 bis 20 Gew.-% an Nanoteilchen .

### Beispiele

Die Durchführung der Erfindung wird im folgenden anhand von Figuren beispielhaft erläutert.

Es zeigen
- Figur 1: ein Schema einer Anordnung zur Durchführung des erfindungsgemäßen Verfahrens,
- Figur 2: ein Schema für den Ersatz der Düse in Figur 1 durch eine n-stufige Düsenanordnung,

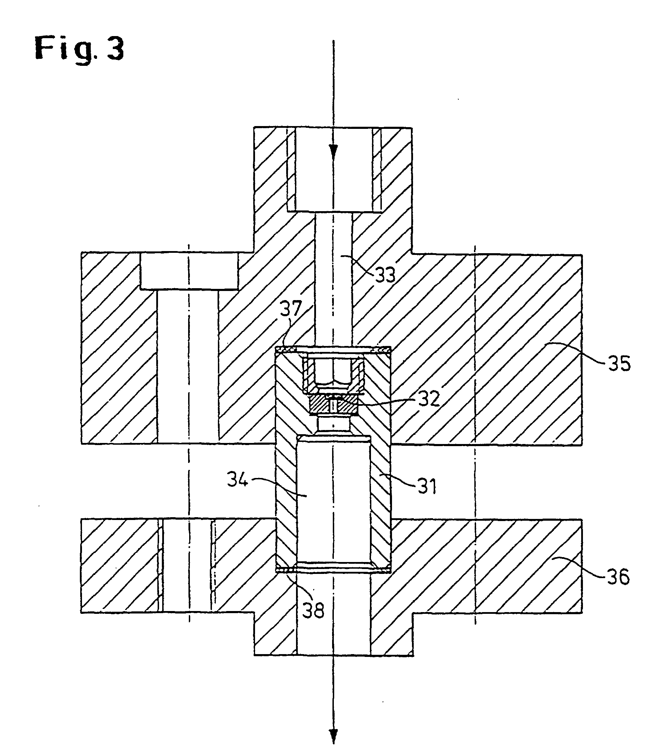

- Figur 3: eine Zerkleinerungsdüse zur Durchführung des erfindungsgemäßen Verfahrens im Schnittbild,

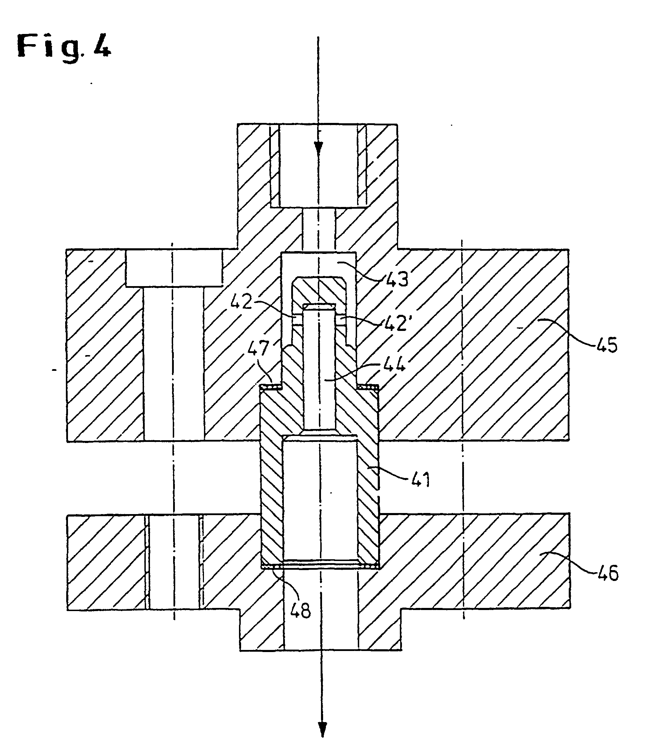

- Figur 4: einen Schnitt durch eine Variante mit zwei gegenüberliegenden Zerkleinerungsdüsen mit gegenüberliegenden Düsenbohrungen,
- Figur 5: einen Schnitt durch eine Variante der erfindungsgemäßen Vorrichtung mit zwei gegenüberliegenden Einlochdüsen

Im einfachsten Fall wird von einem Vorratsbehälter 1 mit Rührer die Dispersion 2 über eine Pumpe 3 und Hochdruckleitung 8 der Hochdruckseite einer Düse 4 zugeführt. Die Dispersion durchläuft die Düse 4 und wird über die Niederdruckleitung 9 entweder in den Behälter 5 für die feinere Lackbindemitteldispersion 7 oder durch eine Rückführung 6 dem Ausgangsbehälter 1 für einen erneuten Durchgang zugeführt.

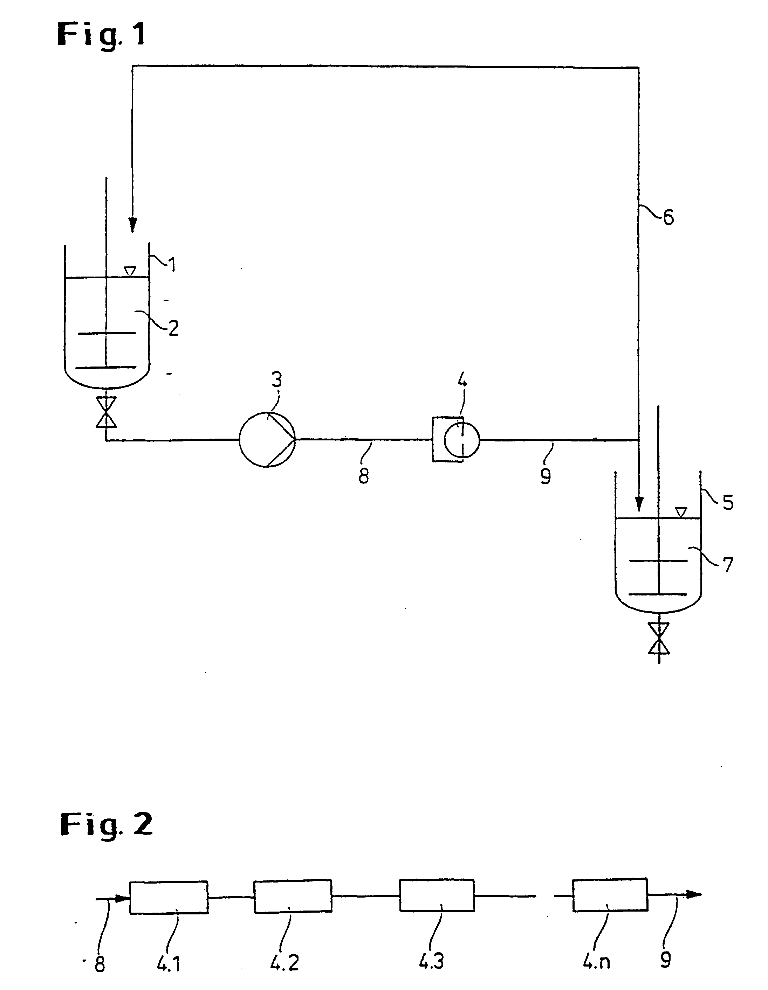

Gemäß Figur 2 können auch mehrere Zerkleinerungsdüsen 4.1, 4.2, bis 4.n direkt hintereinander geschaltet sein, um die Deagglomerierwirkung zu verbessern.

### Ausführungsbeispiele

%-Angaben in den Beispielen beziehen sich auf das Gewicht.

Herstellung der erfindungsgemäßen Lackbindemittel:

Desmophen® LS 2009/1 (Polyol 1, Versuchsprodukt der Bayer AG) wird durch Zugabe des Lösungsmittelgemischs auf 40 % Festkörpergehalt verdünnt. Die festen Nanopartikel werden portionsweise unter fortwährendem Rühren zugegeben bis ein Gehalt von 20 %, bezogen auf den Bindemittelfestkörper, erreicht wird.

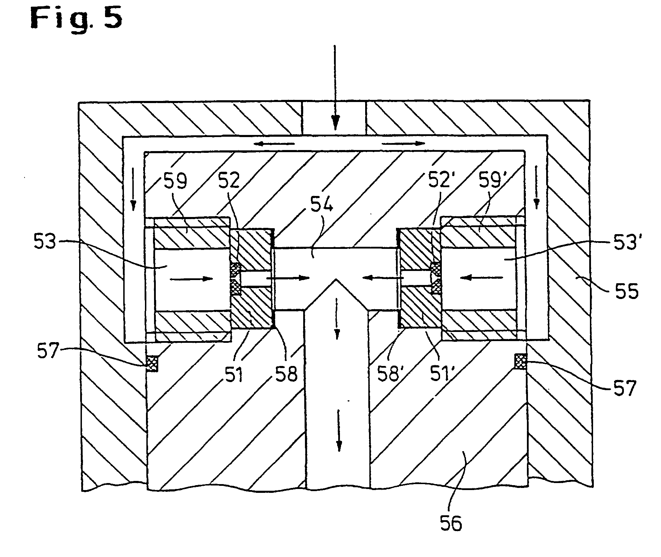

Anschließend wird noch Lösemittelgemisch zugegeben, um den Festkörpergehalt und das Äquivalentgewicht nach Tabelle 1 einzustellen. Die Polyole 2 und 3 (nicht erfindungsgemäße Vergleichsbeispiele) werden ohne weitere Behandlung eingesetzt. Die erfindungsgemäßen Polyole 4 bis 8 werdenn unter dem angegebenen Druck dreimal durch die Düsenstrahldispergiervorrichtung (Fig. 5, 0,2 mm ZrO2-Düsen) gedrückt.

**Tabelle 1**

| **Polyol** | **Nanopartikel** | **Dispergierverf. bei Druck [MPa)** | **% FK** | **ÄG** |
|---|---|---|---|---|
| Polyol 1 | - | - | 70,0 | 567 |
| Polyol 2 | Aerosil® 300 | - | 44,4 | 1072 |
| Polyol 3 | Aerosil® R 812 | - | 44,4 | 1072 |
| Polyol 4 | Aerosil® 300 | 23 | 44,4 | 1072 |
| Polyol 5 | Aerosil® R 812 | 23 | 44,4 | 1072 |
| Polyol 6 | Aerosil® R 104 | 23 | 44,4 | 1072 |
| Polyol 7 | Aerosil® R 972 | 23 | 41,5 | 1107 |
| Polyol 8 | Aerosil® R 974 | 23 | 44,4 | 1072 |

Zur Herstellung der spritzfertigen Mischungen werden die Polyole entsprechend Tabelle 2 in einem Metallbehälter zunächst mit dem entsprechenden Lösemittelgemisch und Additiven versetzt und durch Schütteln oder Rühren homogenisiert. Anschließend wird der Härter Desmodur® N 3390 (Handelsprodukt der Bayer AG) zugesetzt und wiederum homogenisiert. Die Formulierungen werden im Kreuzgang auf grundierte Stahlbleche (für Chemikalienbeständigkeitsprüfung), grundierte und mit schwarzem Basecoat (Fa. Spies & Hecker Serie 293 Tiefschwarz) beschichtete Aluminiumbleche (für Verkratzungsbestandigkeits-Prüfung) und Glasplatten (für Härte-Prüfung und Lösungsmittelbeständigkeits-Prüfung) aufgespritzt. Nach 5 Minuten Antrocknung bei Raumtemperatur werden die Lacke 30 Minuten bei 140°C eingebrannt. Nach 16-stündiger Alterung bei 60°C werden die Prüfungen vorgenommen.

Der Glanz wird nach DIN 67 530, Haze nach ISO/CD 13 803, die Pendeldämpfung nach DIN ISO 1522 und die Auslaufzeit nach DIN EN ISO 2431 bestimmt.

Die Verkratzung der lackierten Aluminiumbleche wird mit einer Laborwaschstraße der Firma Amtec Kistler GmbH erzeugt. Es werden 10 Waschungen mit einer Polyethylenbürste bei 15 bis 25°C Wassertemperatur unter Zusatz von 1,5 g/l Quarzmehl (Sikron-Feinstmehl SH 200, mittlere Korngröße 24 µm) vorgenommen.

Die Chemikalienbeständigkeitsprüfung erfolgt nach der Gradientenofenmethode (Gradientenofen der Firma Byk-Gardner, Typ 2611). Die Prüfung wird auf speziell für diesen Zweck vorgesehenen Stahlblechen (Firma Franz Krüppel-Industriebedarf), die 30 Minuten lang einem Temperaturgradienten 36 bis 75°C ausgesetzt werden (50 % rel. Feuchte), durchgeführt. Die Proben werden nach 1 und nach 24 Stunden Lagerung bei Normalklima (23°C, 50 % rel. Feuchte) beurteilt. Als Prüfergebnis wird für jede Chemikalie der Temperaturwert angegeben, bei dem (ohne Hilfsmittel) die erste sichtbare Schädigung auftritt. Die Prüfergebnisse sind in Tabelle 3 zusammengefaßt.

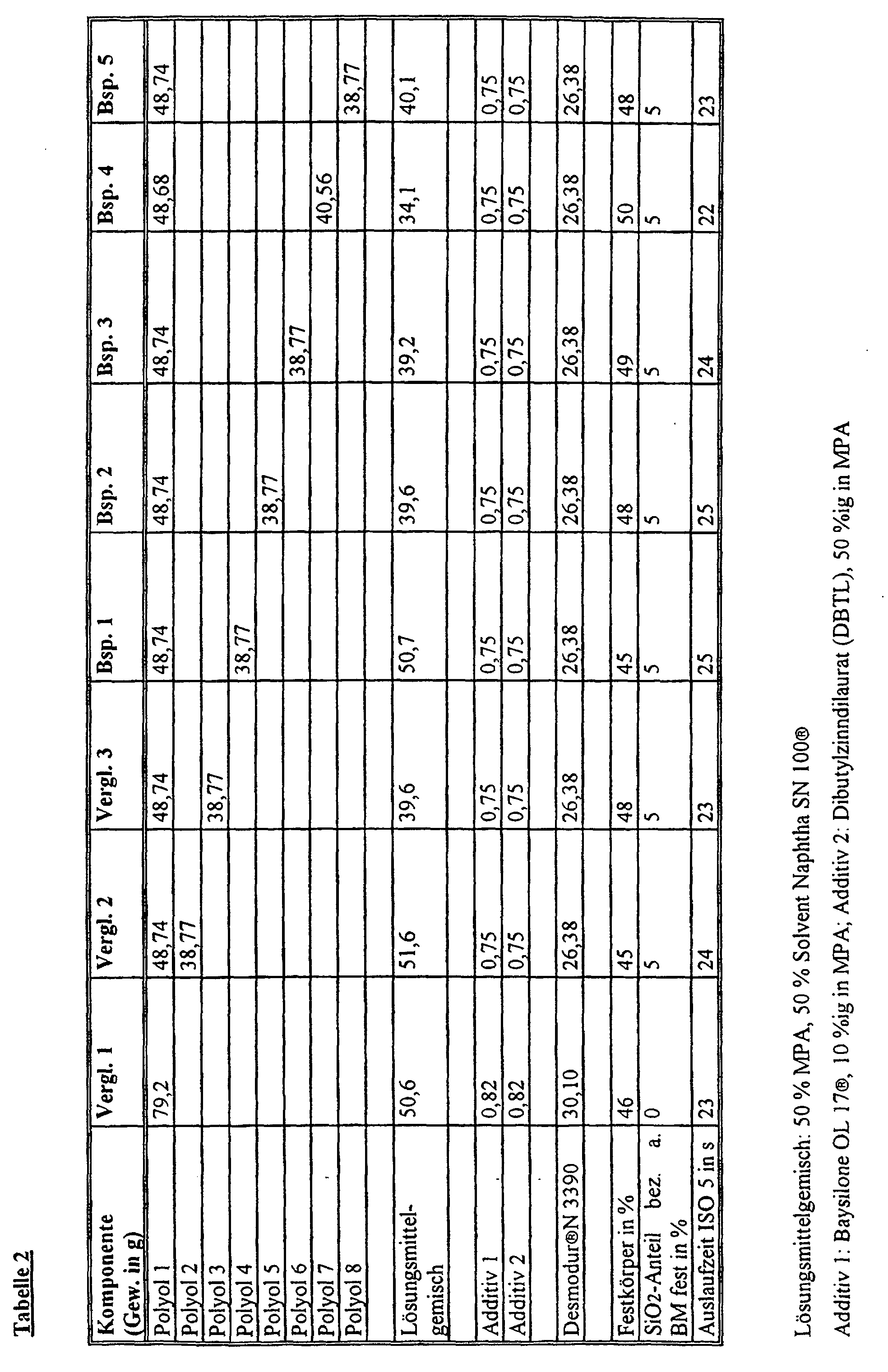

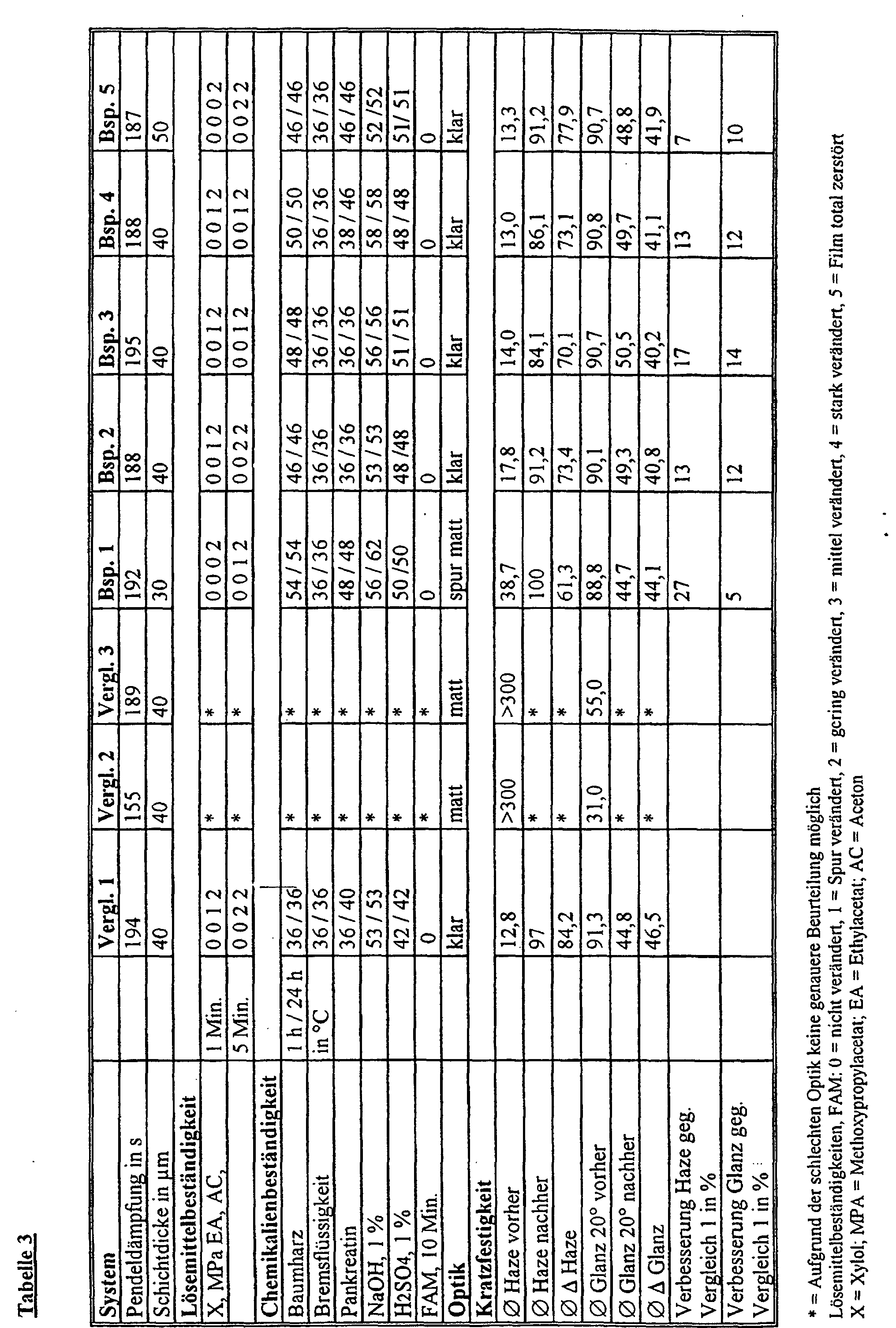

## Patentansprüche

1. Nanopartikel-haltige transparente Lackbindemittel, die bezogen auf den Lackfestkörper 0,5 bis 25 Gew.-% von als Feststoff einarbeitbare, primär nano-skalige Teichen enthalten, hergestellt durch Düsenstrahldispergierung der nanoskaligen Teilchen im Bindemittel.

2. Nanopartikel-haltige transparente Lackbindemittel gemäß Anspruch 1 auf Basis Hydroxylgruppen tragende Polymere wie Polyacrylat-, Polyester-, Polycaprolacton-, Polyether-, Polycarbonat-, Polyurethanpolyole und hydroxyfunktionelle Epoxidharze sowie beliebige Mischungen dieser Polymeren.

3. Nanoskalige pyrogene Kieselsäuren enthaltende transparente Lackbindemittel gemäß Anspruch 1.

4. Nanoskalige, hydrophobierte pyrogene Kieselsäuren enthaltende transparente Lackbindemittel gemäß Anspruch 1.

5. Verwendung der Nanopartikel-haltigen Lackbindemittel gemäß Anspruch 2 zusammen mit aliphatischen Polyisocyanaten in zweikomponentigen Klarlacken.

6. Verfahren zur Herstellung von transparenten Nanopartikel-haltigen Lackbindemitteln gemäß Anspruch 1, **dadurch gekennzeichnet, daß** die Zubereitung in mindestens einem Durchgang durch wenigstens eine Vorrichtung (4) geleitet wird, die mindestens eine Düse (32) oder mindestens einen Schlitzspalt aufweist, mit einem Bohrungsdurchmesser bzw. Spaltbreite von 0,05 bis 1 mm, sowie einem Länge zu Durchmesserverhältnis der Bohrung bzw. einem Tiefe zu Spaltbreite-Verhältnis des Schlitzspaltes von 1 bis 10, wobei zwischen Düsengang und Düsenausgang eine Druckdifferenz von mindestens 0,5 , bevorzugt 1 MPa, besteht.

7. Verwendung von Nanopartikel-haltigen transparenten Lackbindemitteln nach Anspruch 2 bis 6 in Kombination mit Hartem zur Herstellung von Überzügen.

## Claims

1. Nanoparticle-containing transparent coatings binders containing, based on the coating-material solids, from 0.5 to 25% by weight of particles which can be incorporated in solid form and which in primary form are nanoscale, produced by jet dispersion of the nanoscale particles in the binder.

2. Nanoparticle-containing transparent coatings binders according to Claim 1 based on hydroxyl-bearing polymers such as polyacrylate polyols, polyester polyols, polycaprolactone polyols, polyether polyols, polycarbonate polyols, polyurethane polyols and hydroxy-functional epoxy resins and also any desired mixtures of these polymers.

3. Transparent coatings binders according to Claim 1 comprising nanoscale pyrogenic silicas.

4. Transparent coatings binders according to Claim 1 comprising nanoscale, hydrophobicized pyrogenic silicas.

5. Use of the nanoparticle-containing coatings binders according to Claim 2 together with aliphatic polyisocyanates in two-component clearcoat materials.

6. Process for the production of transparent nanoparticle-containing coatings binders according to Claim 1, **characterized in that** the preparation is guided in at least one pass through at least one apparatus (4) which has at least one nozzle (32) or at least one slit having a bore diameter or slit width of 0.05 to 1 mm and a length to diameter ratio of the bore or a depth to width ratio of the slit of 1 to 10, there being a pressure differential between nozzle inlet and nozzle outlet of at least 0.5, preferably 1 MPa.

7. Use of nanoparticle-containing transparent coatings binders according to Claim 2 to 6 in combination with curing agents for the production of coatings.

## Revendications

1. Liants transparents pour produits de revêtement, contenant des nanoparticules, à savoir 0,5 à 25 % en poids, sur les matières solides du liant, de particules primaires à l'échelle nanométrique incorporables à l'état de matière solide, préparés par dispersion des particules nanométriques dans le liant à l'aide de jets de tuyères.

2. Liants transparents pour produits de revêtement contenant des nanoparticules selon la revendication 1 à base de polymères portant des groupes hydroxy tels que des polyacrylate-, polyester-, polycaprolactone-, polyéther-, polycarbonate-, polyuréthanne-polyols, des résines époxydiques à fonctions hydroxy ou mélanges quelconques de ces polymères.

3. Liant transparent pour produits de revêtement contenant des silices pyrogènes à l'échelle nanométrique selon la revendication 1.

4. Liant transparent pour produits de revêtement contenant des silices pyrogènes hydrofugées à l'échelle nanométrique.

5. Utilisation des liants pour produits de revêtement contenant des nanoparticules selon la revendication 2 avec des polyisocyanates aliphatiques dans des vernis clairs à deux composants.

6. Procédé pour la préparation de liants transparents pour produits de revêtement contenant des nanoparticules selon la revendication 1, **caractérisé en ce que** le mélange des composants est envoyé pour au moins un passage au travers d'au moins un dispositif (4) comportant au moins une tuyère (32) ou au moins une fente, avec un diamètre d'orifice ou une largeur de fente de 0,05 à 1 mm, un rapport longueur/diamètre de l'orifice ou un rapport profondeur/largeur de la fente de 1 à 10 et une différence de pression d'au moins 0,5 et de préférence de 1 MPa entre l'entrée dans la tuyère et la sortie de la tuyère.

7. Utilisation des liants transparents pour produits de revêtement contenant des nanoparticules selon les revendications 2 à 6 en combinaison avec des durcisseurs pour l'application de revêtements.
